# EUROPÄISCHE PATENTSCHRIFT

(11) **EP 4 074 805 B1**
(45) Veröffentlichungstag und Bekanntmachung des Hinweises auf die Patenterteilung: **26.07.2023**
(21) Anmeldenummer: 21168616.7
(22) Anmeldetag: 15.04.2021
(51) Int. Cl.: C09J 175/02

(54) **BINDEMITTELZUSAMMENSETZUNG UND VERFAHREN ZUM HERSTELLEN EINES HOLZWERKSTOFFS SOWIE HOLZWERKSTOFF**
WOOD MATERIAL AND BINDER COMPOSITION AND METHOD FOR PRODUCING A WOOD MATERIAL
COMPOSITION DE LIANT ET PROCÉDÉ DE FABRICATION D'UNE MATIÈRE DÉRIVÉE DU BOIS, AINSI QUE MATIÈRE DÉRIVÉE DU BOIS

(43) Veröffentlichungstag der Anmeldung: 19.10.2022
(73) Patentinhaber: SWISS KRONO Tec AG, 6004 Luzern (CH)
(72) Erfinder: Kalwa, Norbert, 32805 Horn-Bad Meinberg (DE)
(74) Vertreter: Kalkoff & Partner Patentanwälte mbB

(56) Entgegenhaltungen:
- EP-A1- 3 133 094
- WO-A1-88/04286
- ZHANG BENGANG ET AL: "Polyurea-formaldehyde resin: a novel wood adhesive with high bonding performance and low formaldehyde emission", THE JOURNAL OF ADHESION, Bd. 97, Nr. 5, 16. Oktober 2019 (2019-10-16), Seiten 477-492, XP55845175, US ISSN: 0021-8464, DOI: 10.1080/00218464.2019.1679631
- ROMANOV S. V. ET AL: "Polyureas-a new promising class of binders for adhesives, sealants, and coatings", POLYMER SCIENCE SERIES D, Bd. 6, Nr. 3, 1. Juli 2013 (2013-07-01), Seiten 175-180, XP55845129, Moscow ISSN: 1995-4212, DOI: 10.1134/S1995421213030209 Gefunden im Internet: URL:https://link.springer.com/content/pdf/ 10.1134/S1995421213030209.pdf>

## Beschreibung

Die Erfindung betrifft eine Bindemittelzusammensetzung zum Herstellen eines Holzwerkstoffs, insbesondere eines plattenförmigen Holzwerkstoffs und ein Verfahren zum Herstellen eines solchen Holzwerkstoffs.

Bei der Herstellung von Holzwerkstoffen (HWS) kommen eine Vielzahl von Bindemittelzusammensetzungen, insbesondere Leime, zur Anwendung. Dabei werden je nach Anwendung unterschiedliche Bindemittelzusammensetzungen favorisiert bzw. sind besonders geeignet. Für Holzwerkstoffplatten, die später in der Möbelherstellung oder im Innenausbau verwendet werden sollen, haben sich Bindemittelzusammensetzungen auf Basis von Harnstoff/Formaldehyd als besonders geeignet erwiesen. Sie sind in großen Mengen verfügbar und damit hergestellte Platten erfüllen die an solche Platten normativ gestellten Anforderungen. Zudem werden diese Platten üblicherweise beschichtet und an den Schmalflächen mit Kanten versiegelt, sodass hier ein Einwirken von Feuchtigkeit nahezu sicher verhindert wird.

Für Anwendungen, bei denen mit erhöhten Luftfeuchten bzw. nachstoßender Feuchtigkeit aus angrenzenden Bauteilen zu rechnen ist, wie z.B. bei Bodenbelägen, werden meist Harnstoff-Formaldehyd-Leime, gegebenenfalls verstärkt mit Melamin, eingesetzt, wobei den erhöhten Anforderungen durch eine erhöhte Menge der Bindemittelzusammensetzungen Rechnung getragen wird.

Bei Holzwerkstoffplatten, die in Bereichen mit hohen Luftfeuchten oder in direktem Kontakt mit Wasser verwendet werden, haben sich mit Melaminharz verstärkte Harnstoff-Formaldehyd-Leime, Phenolharze oder polymeres Diphenylmethandiisocyanat (PMDI) als geeignet erwiesen. Bei diesen Platten kommen neben der hygrischen Belastung häufig auch noch statische Beanspruchungen hinzu. Dem wird in den für die Produkte geltenden Normen durch Prüfungen der Quellung und der Biegefestigkeit Rechnung getragen. Für die verschiedenen Anwendungen kommen dabei insbesondere Sperrhölzer, Spanplatten und OSB (Oriented Strand Boards) zur Anwendung. Diese Platten werden vorzugsweise im Baubereich für konstruktive Anwendungen, im Fahrzeugbereich und als Verlegeplatten eingesetzt.

Obwohl generell für die oben beschriebenen Holzwerkstoffe alle Bindemittel zur Anwendung kommen können, die durch Feuchtigkeit oder Wasser nicht hydrolysiert werden, hat sich für OSB insbesondere polymeres Diphenylmethandiisocyanat als besonders geeignet herausgestellt. Die Gründe dafür sind die gute Wasserbeständigkeit der Bindemittelzusammensetzung und die Formaldehydfreiheit. Dies ist besonders wichtig, da OSB normalerweise unbeschichtet und zusätzlich in erheblichen Quadratmeter-Mengen bezogen auf das Raumvolumen verwendet werden. Wenn Platten mit formaldehydhaltigen Leimen eingesetzt werden, kann diese Kombination trotz des eingehaltenen Grenzwertes bezüglich der Formaldehydemission zu Problemen führen.

Das polymere Diphenylmethandiisocyanat besitzt jedoch gegenüber den anderen Bindemitteln einen gravierenden Nachteil, da es sich kaum durch die Verwendung von Härtern in seiner Reaktivität steuern lässt. Dies ist besonders nachteilhaft bei dickeren Holzwerkstoffplatten. Während bei anderen Bindemittel- bzw. Leimsystemen durch einen Einsatz von unterschiedlichen Mengen wenigstens eines Härters in der Deck- und Mittelschicht deutliche Produktionssteigerungen erreicht werden können, ist dies bei polymerem Diphenylmethandiisocyanat nicht möglich.

Zudem wird zum Aushärten des polymeren Diphenylmethandiisocyanats eine Temperatur von etwa 100°C benötigt, sodass bei dicken Holzwerkstoffen erst in der Mitte des Holzwerkstoffs ein Aushärten eintritt, wenn diese Temperatur auch dort erreicht ist. Somit ist hier ein bedeutender Nachteil, dass keine effektive Steuerungsmöglichkeit bei unterschiedlichen Plattenstärken besteht sowie aufgrund eines langsamen Aushärtens im Inneren des Holzwerkstoffs eine lange Bearbeitungszeit bei hoher Temperatur notwendig ist.

Es ist zwar bekannt, dass polymeres Diphenylmethandiisocyanat bzw. Isocyanat generell mit Polyolen oder auch mit Aminen in ihrer Aushärtung beschleunigt werden kann, jedoch läuft die Reaktion dann bereits bei Raumtemperatur ab, was bei der Produktion von Holzwerkstoffen zu nicht mehr kontrollierbaren Systemen oder zumindest zu einem Voraushärten und damit zu einem erhöhten Leimeinsatz führt. Dies führt zu einer Steigerung der Produktionskosten und zugleich zu einer Verringerung der Produktqualität. Zudem ist diese Art der Aushärtung bei Anlagenstillständen sehr nachteilhaft, da dann die gesamte Menge an beleimten Strands von der Beleimung bis zur Presse verworfen werden muss.

Aus der DE 10 2007 062 316 A1 ist bereits eine wasserfreie, Isocyanat-Gruppen aufweisende Zusammensetzung als Alternative für feuchtigkeitsaushärtende Systeme mit einer NCO-Komponente bekannt, wobei die offenbarte Zusammensetzung ohne eine gegenüber Isocyanat reaktive Komponente auszuhärten ist. Dabei weist die Zusammensetzung ein "NCO-Prepolymer" auf, welches durch die Reaktion eines Esterpolyols mit einem Isocyanat hergestellt wird. Zudem weist die Zusammensetzung mindestens ein quarternäres Ammoniumsalz als Katalysator sowie etwa eine gleiche Menge mindestens einer Verbindung, die Epoxidgruppen trägt, als Co-Katalysator auf.

In der WO 00/46306 A1 wird ein System zur Beschleunigung der Aushärtung von Harnstoff-Formaldehydleimen beschrieben. Dort wird Methylendi-(phenylisocyanat) (MDI) mit einem Katalysator in Mengen bis 1,9 Gew% dem Leim zugemischt, um eine Beschleunigung des Aushärtens zu erreichen. Bei den Katalysatoren handelt es sich um eine Vielzahl von Verbindungen auf Basis von Zinnsalzen und/oder Aminen. Diese Systeme werden unter dem Handelsnamen DABCO mit verschiedenen Nummernzusätzen angeboten.

Aus Zhang Bengang et al: "Polyurea-formalclehyde resin: a novel wood adhesive with high bonding performance and low formaldehyde emission", The Journal of Adhesion, Bd. 97, Nr.5, 16. Oktober 2019 (2019-1 0-16), Seiten 477-492, XP55845175 ist bereits ein Holzklebstoff, nämlich Polyharnstoff - Formaldehydharz (PolyUF), bekannt, der durch die Strategie einer Polykondensation-Hydroxymethylierung hergestellt wurde. Dazu wurden Polyharnstoff-Polymere zunächst durch Polykondensationen zwischen Harnstoff und Ethylendiamin ohne Verwendung von einem Lösungsmittel und einem Katalysator synthetisiert. Nach dem einfachen Entfernen von restlichem Ammoniak wurden die Polyharnstoffpolymere direkt mit Formaldehyd in verschiedenen Molverhältnissen umgesetzt, um hydroxymethylierte Polyharnstoffe herzustellen.

Der Erfindung liegt die technische Aufgabe zu Grunde, eine Bindemittelzusammensetzung zum Herstellen eines Holzwerkstoffs, insbesondere eines plattenförmigen Holzwerkstoffs und ein Verfahren zum Herstellen eines solchen Holzwerkstoffs bereitzustellen, bei denen die Geschwindigkeit des Aushärtens von Isocyanat-Bindemitteln gezielt gesteuert und insbesondere beschleunigt werden kann, wobei die Härtungstemperatur einerseits gesenkt und andererseits in einem vorbestimmten Temperaturintervall gehalten werden kann, sodass ein Beginn des Aushärtens steuerbar ist, wodurch ein sicherer, schneller und kostengünstiger Fertigungsprozess ohne eine Verringerung der Produktqualität ermöglicht wird.

Die erfindungsgemäße Bindemittelzusammensetzung zum Herstellen eines Holzwerkstoffs, insbesondere eines plattenförmigen Holzwerkstoffs, umfasst eine wenigstens ein Isocyanat-Bindemittel aufweisende, organische Phase, eine wässrige Phase sowie zudem einen Phasentransferkatalysator zum Beschleunigen des Aushärtens des Isocyanat-Bindemittels.

Weiterhin betrifft die Erfindung ein Verfahren zum Herstellen eines Holzwerkstoffs, insbesondere eines plattenförmigen Holzwerkstoffs, mit wenigstens den Schritten eines Herstellens und/oder eines Bereitstellens eines Faser- und/oder Spanmaterials, nachfolgend einer Zugabe einer Bindemittelzusammensetzung, insbesondere einer erfindungsgemäßen Bindemittelzusammensetzung, zu dem Spanmaterial, wobei die Bindemittelzusammensetzung eine wenigstens ein Isocyanat-Bindemittel aufweisende, organische Phase und eine zweite, mit der organischen Phase nicht vollständig mischbare wässrige Phase sowie einen Phasentransferkatalysator zum Beschleunigen des Aushärtens des Isocyanat-Bindemittels aufweist, und schließlich dem Formen des Holzwerkstoffs aus dem beleimten Spanmaterial, insbesondere einem Herstellen durch ein Verpressen des beleimten Spanmaterials zu einem plattenförmigen Holzwerkstoff.

Schließlich betrifft die Erfindung die Verwendung einer Bindemittelzusammensetzung gemäß dieser Erfindung mit einem Phasentransferkatalysator zum Herstellen eines Holzwerkstoffs, insbesondere eines plattenförmigen Holzwerkstoffs.

Die Erfinder haben erkannt, dass die Verwendung eines Phasentransferkatalysators in einer Bindemittelzusammensetzung eines Holzwerkstoffs es ermöglicht, die Reaktivität und dabei sowohl die Geschwindigkeit des Aushärtens als auch die Starttemperatur des Aushärtens eines Isocyanat-Bindemittels gezielt zu steuern. Dabei ist es mittels der Erfindung weiterhin in vorteilhafter Weise möglich, gezielt das Aushärten des Isocyanat-Bindemittels und insbesondere von PMDI zu beschleunigen bzw. die Reaktion bei niedrigerer Temperatur zu starten. Insbesondere kann die Starttemperatur so eingestellt werden, dass die Reaktion nicht bereits bei Temperaturen beginnt, die üblicherweise nach dem Trocknen des Spanmaterials beim Beleimen vorhanden sind, typischerweise etwa 40°C.

Weiterhin wird der Phasentransferkatalysator in vorteilhafter Weise nur in geringen Mengen benötigt, sodass dieser keinen negativen Einfluss auf die späteren technologischen Eigenschaften des Holzwerkstoffs und insbesondere von Platten hat. Dies ergibt sich insbesondere daraus, dass ein Phasentransferkatalysator in der Regel in einer Menge von ein bis zwei Zehnerpotenzen niedriger eingesetzt wird als ein im Stand der Technik üblicher Härter. Weiterhin ermöglicht der Einsatz des Phasentransferkatalysators ein Herstellen eines plattenförmigen Holzwerkstoffs, insbesondere mit einer kontinuierlichen Pressvorrichtung, wobei dieses Herstellen aufgrund des Phasentransferkatalysators etwa 10 % schneller erfolgen kann. Somit ermöglicht der Phasentransferkatalysator eine schnelle, kostengünstige und gezielte Herstellung von hochwertigen Holzwerkstoffen.

Unter einer Bindemittelzusammensetzung wird eine Zusammensetzung verstanden, die zur Zugabe und zum Verkleben von Spanmaterial für einen Holzwerkstoff vorgesehen ist, wobei die Bindemittelzusammensetzung bevorzugt derart gebildet ist, dass ausschließlich aus dem Spanmaterial sowie der Bindemittelzusammensetzung ein Holzwerkstoff hergestellt werden kann. Grundsätzlich ist es jedoch auch möglich, dem Holzwerkstoff weitere Bestandteile, wie beispielsweise Hilfs- und Füllstoffe, hinzuzufügen. Dabei kann die Bindemittelzusammensetzung bereits gebrauchsfertig vorliegen und/oder aus einer einzigen Komponente gebildet sein.

Alternativ kann die Bindemittelzusammensetzung aber auch aus mehreren, getrennt bereitgestellten Komponenten, insbesondere aus zwei Komponenten, gebildet sein, die erst vor oder bei dem Gebrauch zusammengeführt und vermischt werden. Dabei kann insbesondere die organische Phase die eine Komponente und die wässrige Phase die andere Komponente sein, wobei der Phasentransferkatalysator bevorzugt in der wässrigen Phase enthalten ist. Darüber hinaus ist es jedoch auch denkbar, dass der Phasentransferkatalysator als Salz oder gelöst als weitere, insbesondere dritte Komponente bereitgestellt und/oder erst zum Gebrauch zugegeben wird. Der Phasentransferkatalysator kann auch in-situ hergestellt werden. Dies hat den Vorteil, dass das Gegenion anwendungsbezogen ausgewählt werden kann. Die gebrauchsfertige Bindemittelzusammensetzung aus einer oder mehreren dann bereits gemischten Komponenten wird häufig auch als Leim oder Harz bezeichnet und entsprechend wird das Aufbringen des Bindemittels auf das Spanmaterial als Beleimen bezeichnet.

Weiterhin ist es insbesondere denkbar, dass die mehreren Komponenten der Bindemittelzusammensetzung erst auf der Oberfläche des zu verklebenden Materials, insbesondere des Spanmaterials, zusammentreffen, wobei bevorzugt erst eine erste Komponente, insbesondere eine wässrige Phase, auf und/oder in das Spanmaterial gebracht und anschließend die organische Phase mit dem wenigstens einem Isocyanat-Bindemittel zugegeben wird.

Der Holzwerkstoff kann grundsätzlich ein beliebiger Werkstoff sein, der mehrheitlich, bevorzugt abgesehen von der Bindemittelzusammensetzung zu wenigstens 90 % aus Holz, Pflanzenfasern und/oder einem daraus hergestellten Material durch ein Verbinden mehrerer Stücke dieses Materials mit einer Bindemittelzusammensetzung gebildet ist. Bevorzugt handelt es sich dabei um wenigstens ein Spanmaterial. Der Holzwerkstoff kann dabei grundsätzlich eine beliebige Form aufweisen, wobei plattenförmige Holzwerkstoffe und insbesondere Lignocellulose und/oder faserhaltige Platten, Spanplatten und/oder Grobspanplatten bevorzugt sind.

Das Spanmaterial kann grundsätzlich beliebige Pflanzenspäne und/oder -fasern aufweisen und ist bevorzugt im Wesentlichen aus Pflanzenspänen gebildet. Besonders bevorzugt wird das Spanmaterial aus Holz hergestellt. Ganz besonders bevorzugt besteht das Spanmaterial aus langen Spänen (strands) und/oder groben Spänen, insbesondere zum Herstellen einer Grobspanplatte, auch OSB (oriented strand boards) genannt. Die zur Herstellung einer Grobspanplatte hergestellten oder bereitgestellten Holzspäne können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0,3 und 1,5 mm, insbesondere bevorzugt zwischen 0,4 und 1 mm aufweisen. Für Spanplatten sind die Spangrößen für Deck- und/oder Mittelschicht bevorzugt im Bereich von < 1 mm bis ca. 30 mm.

Obwohl das Formen des Holzwerkstoffs grundsätzlich in beliebiger Weise vorgenommen werden kann, erfolgt es bevorzugt als kontinuierlicher Prozess, insbesondere durch Aufstreuen des beleimten Spanmaterials auf eine Fördervorrichtung, insbesondere auf ein Förderband, und/oder durch Verpressen des beleimten Spanmaterials zu dem Holzwerkstoff. Das Formen des Holzwerkstoffs und insbesondere das Verpressen erfolgt bevorzugt unter hohem Druck und/oder bei einer hohen Temperatur, bevorzugt von wenigstens 150°C, besonders bevorzugt zwischen 170°C und 220°C und ganz besonders bevorzugt zwischen 180°C und 220°C.

Insbesondere bevorzugt wird das beleimte Spanmaterial zum Herstellen einer Grobspanplatte in Streuapparaturen alternierend längs und quer zur Produktionsrichtung gestreut, sodass das Spanmaterial kreuzweise, besonders bevorzugt in wenigstens drei Schichten angeordnet ist, insbesondere einer unteren Deckschicht, einer Mittelschicht und einer oberen Deckschicht. Die Streurichtung von unterer und oberer Deckschicht ist dabei bevorzugt gleich und/oder weicht von der Streurichtung der Mittelschicht ab. Generell bevorzugt ist der Aufbau des Holzwerkstoffs und insbesondere eines plattenförmigen Holzwerkstoffs mehrlagig bzw. mehrschichtig.

Grundsätzlich kann der Holzwerkstoff in alle Raumrichtungen homogen aufgebaut sein, wobei jedoch bevorzugt ein mehrlagiger bzw. mehrschichtiger Aufbau und besonders bevorzugt in sich unterscheidenden Schichten, ganz besonders bevorzugt entlang einer Raumrichtung und insbesondere besonders bevorzugt in Bezug auf die Dicke des Holzwerkstoffs erfolgt. Dabei können sich die einzelnen Schichten insbesondere in ihrer Dicke, ihrer Dichte, in der Orientierung des Spanmaterials, in der Zusammensetzung des Spanmaterials, in den Dimensionen des Spanmaterials, in dem Anteil der enthaltenen Bindemittelzusammensetzung und/oder in der chemischen Zusammensetzung der Bindemittelzusammensetzung voneinander unterscheiden.

Das Herstellen des Spanmaterials erfolgt bevorzugt durch ein Abschälen von entrindetem Rundholz, bevorzugt Nadelhölzer, in Längsrichtung und/oder durch rotierende Messer. Weiterhin bevorzugt wird das hergestellte Spanmaterial vor der Zugabe des Bindemittels getrocknet, insbesondere um die natürliche Feuchtigkeit des Spanmaterials bei hohen Temperaturen zu reduzieren. Besonders bevorzugt liegt die Feuchtigkeit des Spanmaterials nach dem Trocknen unter 10% und ganz besonders bevorzugt unter 7 %, um Spalter beim späteren Verpressen zu vermeiden und/oder eine starke Dampfbildung beim Verpressen zu vermeiden.

Die Zugabe der Bindemittelzusammensetzung zu dem Spanmaterial ist bevorzugt ein Beleimen wenigstens eines Teils und bevorzugt des gesamten Spanmaterials als Ausgangsmaterial für den Holzwerkstoff. Dabei wird weiterhin bevorzugt die Bindemittelzusammensetzung fein verteilt auf das Spanmaterial aufgebracht. Alternativ ist es denkbar, dass erst eine erste Komponente der Bindemittelzusammensetzung aufgebracht bzw. das Spanmaterial darin eingeweicht und anschließend erst die zweite Komponente aufgebracht wird. Die Menge der Bindemittelzusammensetzung, insbesondere im Falle der Verwendung von PMDI als Bindemittel, beträgt bevorzugt 1 bis 10 Gew%, besonders bevorzugt 2 bis 7 Gew%, insbesondere 5 Gew% bezogen auf die Gesamtmenge des Spanmaterials.

Bei dem erfindungsgemäßen Holzwerkstoff ist nach dessen Herstellung die Bindemittelzusammensetzung bevorzugt vollständig gehärtet, wobei insbesondere bevorzugt das Isocyanat-Bindemittel mit dem Wasser der wässrigen Phase zu Carbamidsäuren und/oder weiter zu den entsprechenden Aminen und/oder Polyharnstoffen reagiert ist. Dabei besteht die gehärtete Bindemittelzusammensetzung bevorzugt im Wesentlichen aus Polyharnstoffen, dem Phasentransferkatalysator und/oder weiteren Bestandteilen der organischen und/oder wässrigen Phase.

Erfindungsgemäß weist die Bindemittelzusammensetzung wenigstens ein Isocyanat-Bindemittel auf. Dabei kann die Bindemittelzusammensetzung grundsätzlich, insbesondere in Abhängigkeit der gewünschten Eigenschaften des hergestellten Holzwerkstoffs, nur ein einziges Bindemittel oder aber ein Gemisch aus mehreren Bindemitteln aufweisen, wobei die weiteren Bindemittel ebenfalls Isocyanat-Bindemittel oder aber auch beliebige andere Bindemittel sein können. Dabei beträgt der Anteil aller Bindemittel, insbesondere des Isocyanat-Bindemittels, in der Bindemittelzusammensetzung bevorzugt zwischen 60 % und 99 %, besonders bevorzugt wenigstens 70 % und ganz besonders bevorzugt wenigstens 85 %. Der Wasseranteil bzw. der Anteil der wässrigen Phase an der Bindemittelzusammensetzung beträgt bevorzugt zwischen 0 und 15 %, besonders bevorzugt zwischen 0,01 und 10 % und ganz besonders bevorzugt zwischen 0,5 und 8 %.

Erfindungsgemäß weist die Bindemittelzusammensetzung wenigstens einen, bevorzugt genau einen Phasentransferkatalysator auf, wobei es jedoch auch grundsätzlich denkbar ist, mehrere chemisch unterschiedliche Phasentransferkatalysatoren zugleich einzusetzen. Der erfindungsgemäße Phasentransferkatalysator ermöglicht grundsätzlich den Eintritt von Bestandteilen der wässrigen Phase, insbesondere von Wasser selbst, in die nicht wässrige bzw. organische Phase, insbesondere zu dem Isocyanat-Bindemittel, wobei dann das Wasser ganz besonders bevorzugt der Reaktand zum Härten des Bindemittels ist. Entsprechend transferiert der Phasentransferkatalysator bevorzugt Wasser aus der wässrigen Phase in die organische Phase, wo eine Reaktion mit dem Isocyanat erfolgen kann und darauffolgend der Phasentransferkatalysator wieder frei wird.

Somit beschleunigt der Phasentransferkatalysator die Reaktion des Härtens des Isocyanat-Bindemittels, ist jedoch selbst nicht direkt an der Reaktion beteiligt. Insbesondere bevorzugt wird der Phasentransferkatalysator derart gewählt, dass dieser nicht an einer Aktivierung der Isocyanat-Gruppe des Bindemittels beteiligt ist. Der Phasentransferkatalysator führt zu einer geringeren notwendigen Reaktionstemperatur und/oder zu einer verkürzten Reaktionszeit und ermöglicht zudem eine gute Steuerbarkeit der Reaktionskinetik. Dabei besteht bevorzugt ein linearer Zusammenhang zwischen der Gelierzeit bzw. der Dauer des Härtens und der Menge des eingesetzten Phasentransferkatalysators.

Die wässrige und die organische Phase sind grundsätzlich nicht vollständig mischbar, bevorzugt nur gering mischbar und besonders bevorzugt - ggf. bis auf Kleinstmengen - nicht mischbar. Entsprechend ist die Bindemittelzusammensetzung, zumindest zum Zeitpunkt der Zugabe der Bindemittelzusammensetzung zu einem Spanmaterial, bevorzugt ein mehrphasiges Gemisch, das sowohl langfristig stabil sein kann als auch sich im Laufe der Zeit wieder entmischen kann.

Eine bevorzugte Ausgestaltung der erfindungsgemäßen Bindemittelzusammensetzung sieht vor, dass der Phasentransferkatalysator ein Oniumion aufweist. Besonders bevorzugt weist der Phasentransferkatalysator ein einziges Oniumion auf und ganz besonders bevorzugt ist der Phasentransferkatalysator ein Onium-Salz. Dabei kann das Onium-Salz sowohl ein anorganisches Salz sein als auch organische Reste bzw. organische Ionen aufweisen. Generell ist es vorteilhaft, den Phasentransferkatalysator als ein Salz einzusetzen, wobei die Wirkung bevorzugt durch das Kation erzielt wird. Dabei ist das Kation bevorzugt einfach geladen. Als Gegenion kann grundsätzlich ein beliebiges Anion verwendet werden, wobei das Anion bevorzugt ein anorganisches und/oder ein einfach negatives Anion, besonders bevorzugt ein einatomiges Anion und ganz besonders bevorzugt ein Halogenid ist. Grundsätzlich kann der Phasentransferkatalysator aber ein beliebiges Anion, beispielsweise Nitrat, als Gegenion aufweisen. Es können auch Gegenionen auf Basis von organischen Säuren eingesetzt werden. Die Variation des Gegenions ist eine Möglichkeit die Katalysatorwirkung zu steuern.

Besonders bevorzugt ist eine Ausgestaltung der erfindungsgemäßen Bindemittelzusammensetzung bei der der Phasentransferkatalysator ein Ammonium-, Phosphonium- und/oder Sulfoniumion aufweist und insbesondere durch ein solches Kation gebildet ist. Entsprechend ist der Phasentransferkatalysator bevorzugt eine quartäre Ammoniumverbindung oder aber eine entsprechende Phosphonium- und/oder Sulfoniumverbindung. Besonders bevorzugt ist der Phasentransferkatalysator ein Ammonium-, Phosphonium- und/oder Sulfoniumsalz.

Insbesondere bevorzugt ist eine Ausgestaltung der erfindungsgemäßen Bindemittelzusammensetzung mit einem Triethylbenzylammonium-Salz, insbesondere Triethylbenzylammoniumchlorid, als Phasentransferkatalysator. Dabei wird das Triethylbenzylammoniumchlorid (TEBA) häufig auch als Benzyltriethylammoniumchlorid bezeichnet. Alternativ kann auch Triethylendiamin (TEDA) bzw. ein Salz, bevorzugt ein Ammoniumsalz und insbesondere das Ammoniumchlorid des TEDA als Phasentransferkatalysator verwendet werden. Dabei wird TEDA gelegentlich auch als DABCO bezeichnet, was jedoch nicht eindeutig ist, da auch zahlreiche andere Stoffe und Stoffgemische regelmäßig als DABCO bezeichnet werden, darunter auch Zusammensetzungen mit Katalysatoren auf Basis von Zinnsalzen und/oder Aminen, für die DABCO als Handelsname verwendet wird.

Jedoch kann grundsätzlich auch ein anderer, bevorzugt ein organischer Phasentransferkatalysator eingesetzt werden. Ganz besonders bevorzugt ist der Phasentransferkatalysator dabei ein Kronenether, insbesondere 12-Krone-4, wobei auch beliebige andere Kronenether, beispielsweise 15-Krone-5 oder 18-Krone-6, denkbar sind. Ein solcher Kronenether als Phasentransferkatalysator kann grundsätzlich alternativ oder zusätzlich zu einem anderen der Phasentransferkatalysator, bevorzugt einem Oniumsalz und insbesondere zu TEDA verwendet werden.

Gemäß einer vorteilhaften Weiterbildung der erfindungsgemäßen Bindemittelzusammensetzung ist die Bindemittelzusammensetzung formaldehydfrei und/oder setzt vor, während oder nach dem Aushärten kein Formaldehyd frei, wodurch eine besondere Eignung zur Verwendung in Innenräumen vorliegt.

Obwohl ein beliebiges Isocyanat-Bindemittel in der Bindemittelzusammensetzung enthalten sein kann und bevorzugt dessen Hauptbindemittel bildet, ist es bevorzugt, dass das Isocyanat-Bindemittel polymeres Diphenylmethandiisocyanat (PMDI) aufweist und insbesondere polymeres Diphenylmethandiisocyanat ist. Ganz besonders bevorzugt ist das Diphenylmethandiisocyanat das einzige Isocyanat-Bindemittel und insbesondere bevorzugt generell das einzige Bindemittel in der Bindemittelzusammensetzung. Grundsätzlich ist aber auch eine Verwendung von beispielsweise Toluol-2,4-diisocyanat (TDI), Hexamethylendiisocyanat (HDI), Methylendiphenyldiisocyanat (MDI), meta-Tetramethylxylylendiisocyanat (TMXDI), Isophorondiisocyanat (IPDI) und/oder 4,4'-Diisocyanatodicyclohexylmethan (H12MDI) oder eines weiteren Isocyanats als Isocyanat-Bindemittel einzeln oder in Kombination, insbesondere mit polymerem Diphenylmethandiisocyanat (PMDI), denkbar.

Bei einer vorteilhaften Ausgestaltung der erfindungsgemäßen Bindemittelzusammensetzung beträgt der Anteil des Phasentransferkatalysators 0,01 % bis 5 %, bevorzugt 0,02 % bis 2 %, besonders bevorzugt 0,05 % bis 1,0 % und ganz besonders bevorzugt 0,1 % bis 0,5 % bezogen auf die Masse des Isocyanat-Bindemittels. Dabei ist die zu der Bindemittelzusammensetzung zugesetzte Menge des Phasentransferkatalysators wesentlich für die Steuerung der Reaktionsgeschwindigkeit des Isocyanat-Bindemittels und/oder des Aushärtens des Bindemittels. Alternativ oder zusätzlich kann eine Steuerung über eine Einstellung bzw. Anpassung der Temperatur erfolgen.

Eine bevorzugte Weiterbildung des erfindungsgemäßen Verfahrens zum Herstellen eines Holzwerkstoffs sieht vor, dass die Zugabe der Bindemittelzusammensetzung zum dem Spanmaterial in Form einer Zugabe von zwei getrennten Komponenten der Bindemittelzusammensetzung erfolgt, wobei die eine Komponente bevorzugt die das Isocyanat-Bindemittel aufweisende, organische Phase ist und/oder die andere Komponente bevorzugt die wässrige Phase ist, in der besonders bevorzugt der Phasentransferkatalysator enthalten, insbesondere gelöst ist. Bevorzugt erfolgt dabei das Zusammentreffen beider Komponenten der Bindemittelzusammensetzung auf der Oberfläche des Spanmaterials. Zusätzlich oder alternativ kann auch erst eine der Komponenten, insbesondere die wässrige Phase, zu dem Spanmaterial gegeben und dabei insbesondere gleichmäßig auf dessen Oberfläche aufgetragen werden und nachfolgend dann die zweite Komponente, insbesondere das Isocyanat-Bindemittel bzw. die organische Phase, hinzugefügt werden. Dies wird bevorzugt in einer Beleimtrommel oder im Coil durchgeführt. Alternativ ist es auch möglich, dass die aus wenigstens zwei und bevorzugt aus genau zwei Komponenten bestehende Bindemittelzusammensetzung erst unmittelbar vor der Zugabe zu dem Spanmaterial zusammengefügt wird, indem bevorzugt die organische Phase und die wässrige Phase, insbesondere mit dem Phasentransferkatalysator, ineinander vermengt werden. Dies kann vor der Beleimtrommel oder dem Coil unter Zuhilfenahme z. B. eines Statikmischer erfolgen.

Bevorzugt weist der Holzwerkstoff mindestens eine Schicht auf, wobei ein Aufbau in mehreren Schichten und dabei besonders in wenigstens drei Schichten, insbesondere einer unteren Deckschicht, einer Mittelschicht und einer oberen Deckschicht, vorteilhaft ist. Dabei weist weiterhin bevorzugt wenigstens eine der Schichten, bevorzugt die Mittelschicht, eine Bindemittelzusammensetzung mit einem Phasentransferkatalysator auf und wenigstens eine weitere Schicht, bevorzugt die untere oder die obere Deckschicht und besonders bevorzugt die untere und die obere Deckschicht, weist eine Bindemittelzusammensetzung ohne Phasentransferkatalysator auf. Generell ist bevorzugt, dass nur eine einzige Schicht, insbesondere eine Mittelschicht, oder nur alle im Inneren des Holzwerkstoffs angeordneten und/oder keine Deckschicht bildenden Schichten eine Bindemittelzusammensetzung mit einem Phasentransferkatalysator aufweisen.

Schließlich weist der Holzwerkstoff bevorzugt einen Aufbau mit wenigstens drei Schichten, insbesondere wenigstens einer unteren Deckschicht, einer Mittelschicht und einer oberen Deckschicht auf, wobei wenigstens zwei der Schichten, bevorzugt darunter die Mittelschicht, und besonders bevorzugt alle Schichten eine Bindemittelzusammensetzung mit einem Phasentransferkatalysator aufweisen, wobei der Mengenanteil des Phasentransferkatalysators in der Mittelschicht höher ist als in den Deckschichten. Ein unterschiedlicher Anteil des Phasentransferkatalysators kann dabei genutzt werden, den unterschiedlich schnellen Wärmeeintrag, insbesondere beim Pressen von Holzwerkstoffplatten, zu berücksichtigen und somit ein besonders gleichmäßiges Aushärten des Bindemittels über die gesamte Dicke des Holzwerkstoffs zu gewährleisten. Besonders bevorzugt steigt der Anteil des Phasentransferkatalysators von den Deckschichten hin zu den Schichten in der Mitte des Holzwerkstoffs an. Bevorzugt ist der Anteil des Phasentransferkatalysators einer Mittelschicht zwischen 5 % und 500 %, besonders bevorzugt zwischen 10 % und 200 % und ganz besonders bevorzugt zwischen 20 % und 100 % höher als der Anteil des Phasentransferkatalysators in einer Deckschicht, insbesondere in beiden Deckschichten.

Die Erfindung wird nachfolgend auf Basis mehrerer Vergleichsversuche sowie in Form von Ausführungsbeispielen näher erläutert.

### Ausführungsbeispiel 1:

In einem Reagenzglas werden 20 ml Wasser, in dem eine in Tabelle 1 angegebene Menge eines Phasentransferkatalysators enthalten ist, mit der gleichen Menge polymeren Diphenylmethandiisocyanats (PMDI), einem Isocyanat-Bindemittel, als organische Phase überschichtet. Als Phasentransferkatalysator wird Triethylbenzylammoniumchlorid (TEBA) und Diazabicyclooctan (DABCO), insbesondere als Diammoniumsalz mit HCl eingesetzt, geprüft. Anschließend wird das Reagenzglas in ein Wasserbad überführt, das mit Hilfe einer darunter befindlichen Heizplatte auf die, in der Spalte 4 der Tabelle 1 angegebene Temperatur gebracht wird. Mit Hilfe eines Glasstabes wird in regelmäßigen Zeitabständen durch Eintauchen in das PMDI die Gelierzeit bestimmt. Die Gelierzeit galt als erreicht, wenn das PMDI beim Eintauchen keine flüssige, sondern eine feste, krümelige Konsistenz hatte.

**Tabelle 1: Vergleichsversuche ohne Phasentransferkatalysator sowie mit Triethylbenzylammoniumchlorid (TEBA) und Diazabicyclooctan (DABCO) (DABCO als Ammoniumsalz mit HCl)**

| Nr. | Katalysator | Menge Katalysator in % bez. auf PMDI | Temperatur in °C | Gelierzeit in min |
|---|---|---|---|---|
| 1 | Nullprobe | 0 | 40 | 41,0 |
| 2 | DABCO | 0,1 | 40 | 37,0 |
| 3 | TEBA | 0,1 | 40 | 39,0 |
| 4 | Nullprobe | 0 | 80 | 12,44 |
| 5 | DABCO | 0,1 | 80 | 8,45 |
| 6 | TEBA | 0,1 | 80 | 11,02 |
| 7 | DABCO/TEBA 1:1 | 0,1 | 80 | 8,26 |
| 8 | TEBA | 0,2 | 80 | 8,21 |
| 9 | DABCO/TEBA 1:1 | 0,2 | 80 | 8,59 |
| 10 | Nullprobe | 0 | 100 | 5,57 |
| 11 | TEBA | 0,1 | 100 | 4,30 |
| 12 | DABCO | 0,1 | 100 | 5,01 |
| 13 | DABCO/TEBA | 0,1 | 100 | 5,28 |
| 14 | TEBA | 0,2 | 100 | 5,58 |
| 15 | DABCO | 0,2 | 100 | 5,41 |
| 16 | DABCO/TEBA 1:1 | 0,2 | 100 | 5,33 |
| 17 | TEBA | 0,5 | 80 | 4,39 |
| 18 | DABCO | 0,5 | 80 | 4,22 |
| 19 | TEBA | 0,5 | 100 | 5,19 |
| 20 | DABCO | 0,5 | 100 | 3,23 |

Wie sich zeigt, wird durch die Zugabe des Phasentransferkatalysators die Gelierzeit deutlich reduziert. Es besteht in etwa ein linearer Zusammenhang zwischen Gelierzeit und Menge an Phasentransferkatalysator. Die Mischung von Katalysatoren bringt keine wesentlichen Vorteile gegenüber den Einzelkatalysatoren. Durch eine variable Zugabe des Katalysators kann hingegen die Aushärtung des PMDI gesteuert werden.

### Ausführungsbeispiel 2:

Buchenjoche werden mit der Seite, die später zur Verklebung verwendet werden sollen, eine Stunde in eine 0,5 Gew%ige Lösung von Triethylbenzylammoniumchlorid (TEBA) in Wasser gelegt. Danach werden sie auf einem zweiten Joch, auf das Diphenylmethandiisocyanat (PMDI) in einer Menge von ca. 100 g/m² aufgebracht worden ist, mit Hilfe einer Schraube und einem Drehmomentschlüssel mit identischer Kraft fixiert. Vergleichsproben ohne TEBA, die lediglich in Wasser gelegt wurden, werden ebenfalls geprüft. Die Proben werden dann in einem Trockenschrank bei 80°C gelagert. Nach 10, 20, 30 und 40 Minuten werden jeweils Proben und Vergleichsproben entnommen. Diese Proben werden schnell auf Raumtemperatur abgekühlt und danach mit Hilfe einer Prüfmaschine die Querzugfestigkeit bestimmt.

**Tabelle 2: Prüfung der Querzugfestigkeit mit und ohne Phasentransferkatalysator**

| Aushärtungszeit in min | Nullprobe Querzug in N/mm² | TEBA Querzug in N/mm² |
|---|---|---|
| 10 | 0 | 0,08 |
| 20 | 0,08 | 0,16 |
| 30 | 0,26 | 0,41 |
| 40 | 0,52 | 0,54 |

Wie aus der Tabelle 2 zu entnehmen ist, reagiert die Variante mit dem Phasentransferkatalysator früher als die Variante ohne Katalysator. Bei einer Aushärtungszeit von 40 Minuten verliert sich der Effekt.

### Ausführungsbeispiel 3:

Bei der Herstellung einer OSB (Oriented Strand Board) wird zu einer Bindemittelzusammensetzung enthaltend das Isocyanat-Bindemittel polymeres Diphenylmethandiisocyanat (PMDI) Triethylbenzylammoniumchlorid (TEBA) in einer Menge von 0,5 Gew% bezogen auf die Masse des PMDI als Katalysator zugegeben. Die Bindemittelzusammensetzung ist dabei zum Beleimen des Spanmaterials einer Mittelschicht des OSB vorgesehen. Dabei wird der Katalysator als wässrige Lösung über einen Statikmischer unmittelbar vor dem Beleimen des Spanmaterials zugegeben, wobei das Volumenverhältnis der organischen Phase zu der zugegebenen wässrigen Phase 1:0,4 betrug.

Zu der PMDI aufweisenden organischen Phase der Bindemittelzusammensetzung, die für das Beleimen des Spanmaterials der Deckschichten vorgesehen ist, wurde kein TEBA als Phasentransferkatalysator zugegeben. Anschließend wird das jeweilige Spanmaterial mit den beiden Bindemittelzusammensetzungen im Coil besprüht und nach dem Streuen für eine 18 mm Platte einer Conti-Presse zugeführt. Dabei wurde die Geschwindigkeit gegenüber der Produktion ohne Katalysator schrittweise um 10 % gesteigert. Bei der Produktion wurden keine Spalter oder andere Probleme beobachtet. Bei der Prüfung der technologischen Werte (Querzugfestigkeit, Quellung) wurden gegenüber der Produktion bei Standardgeschwindigkeit keine Unterschiede festgestellt.

### Ausführungsbeispiel 4:

Die Phasentransferkatalysatoren werden in der Deck- und der Mittelschicht von Holzwerkstoffplatten bei der Verwendung von PMDI als Leim eingesetzt. Dabei wird die Dosierung in der Mittelschicht höher gewählt, da die Wärme der Presse die Mittelschicht verzögert erreicht. Dabei wird der Katalysator als wässrige Lösung zugegeben, wobei der Mittelschicht eine 0,2 Gew%ige und den Deckschichten eine 0,5 Gew%ige zugegeben wird. Ansonsten erfolgt die Herstellung der Holzwerkstoffplatten wie im Ausführungsbeispiel 3 angeben.

## Patentansprüche

1. Bindemittelzusammensetzung zum Herstellen eines Holzwerkstoffs, insbesondere eines plattenförmigen Holzwerkstoffs, mit
- einer wenigstens ein Isocyanat-Bindemittel aufweisenden, organischen Phase,
- einer wässrigen Phase und
- einem Phasentransferkatalysator zum Beschleunigen des Aushärtens des Isocyanat-Bindemittels.

2. Bindemittelzusammensetzung zum Herstellen eines Holzwerkstoffs nach Anspruch 1, **dadurch gekennzeichnet, dass** die wässrige Phase mit der organischen Phase nicht mischbar ist und als Reaktand zum Härten des Isocyanat-Bindemittels vorgesehen ist.

3. Bindemittelzusammensetzung zum Herstellen eines Holzwerkstoffs nach Anspruch 1 oder 2, **dadurch gekennzeichnet, dass** der Phasentransferkatalysator ein Oniumion aufweist.

4. Bindemittelzusammensetzung zum Herstellen eines Holzwerkstoffs nach wenigstens einem der vorhergehenden Ansprüche, **dadurch gekennzeichnet, dass** der Phasentransferkatalysator ein Ammonium-, Phosphonium- und/oder Sulfoniumion aufweist.

5. Bindemittelzusammensetzung zum Herstellen eines Holzwerkstoffs nach wenigstens einem der vorhergehenden Ansprüche, **dadurch gekennzeichnet, dass** der Phasentransferkatalysator Triethylbenzylammoniumchlorid ist.

6. Bindemittelzusammensetzung zum Herstellen eines Holzwerkstoffs nach wenigstens einem der vorhergehenden Ansprüche, **dadurch gekennzeichnet, dass** der Phasentransferkatalysator ein Kronenether, insbesondere 12-Krone-4, ist.

7. Bindemittelzusammensetzung zum Herstellen eines Holzwerkstoffs nach wenigstens einem der vorhergehenden Ansprüche, **dadurch gekennzeichnet, dass** die Bindemittelzusammensetzung formaldehydfrei ist und/oder kein Formaldehyd freisetzt.

8. Bindemittelzusammensetzung zum Herstellen eines Holzwerkstoffs nach wenigstens einem der vorhergehenden Ansprüche, **dadurch gekennzeichnet, dass** das Isocyanat-Bindemittel polymeres Diphenylmethandiisocyanat ist.

9. Bindemittelzusammensetzung zum Herstellen eines Holzwerkstoffs nach wenigstens einem der vorhergehenden Ansprüche, **gekennzeichnet durch** einen Anteil des Phasentransferkatalysators von 0,1 % bis 0,5 % bezogen auf die Masse des Isocyanat-Bindemittels.

10. Verfahren zum Herstellen eines Holzwerkstoffs, insbesondere eines plattenförmigen Holzwerkstoffs, mit den Schritten:
- Herstellen und/oder Bereitstellen eines Spanmaterials,
- Zugabe einer Bindemittelzusammensetzung zu dem Spanmaterial, wobei die Bindemittelzusammensetzung eine wenigstens ein Isocyanat-Bindemittel aufweisende, organische Phase und eine zweite, mit der organischen Phase nicht mischbare wässrige Phase sowie einen Phasentransferkatalysator zum Beschleunigen des Aushärtens des Isocyanat-Bindemittels aufweist, und
- Formen des Holzwerkstoffs aus dem beleimten Spanmaterial, insbesondere Verpressen zu einem plattenförmigen Holzwerkstoff.

11. Verfahren zum Herstellen eines Holzwerkstoffs nach Anspruch 10, **dadurch gekennzeichnet, dass** die Zugabe der Bindemittelzusammensetzung zu dem Spanmaterial in Form einer Zugabe von zwei getrennten Komponenten der Bindemittelzusammensetzung erfolgt, wobei die eine Komponente die das Isocyanat-Bindemittel aufweisende, organische Phase ist und die andere Komponente die wässrige Phase ist, in der der Phasentransferkatalysator gelöst ist.

12. Verfahren zum Herstellen eines Holzwerkstoffs nach Anspruch 10, **dadurch gekennzeichnet, dass** die aus zwei Komponenten bestehende Bindemittelzusammensetzung erst unmittelbar vor der Zugabe zu dem Spanmaterial gebildet wird, indem die organische Phase und die wässrige Phase mit dem Phasentransferkatalysator ineinander vermengt werden.

## Claims

1. Binder composition for producing a wood-based material, in particular a board-shaped wood-based material, with
- an organic phase comprising at least one isocyanate binder,
- an aqueous phase and
- a phase transfer catalyst to accelerate the curing of the isocyanate binder.

2. Binder composition for producing a wood-based material according to claim 1, **characterised in that** the aqueous phase is immiscible with the organic phase and is provided as reactant for curing the isocyanate binder.

3. A binder composition for producing a wood-based material according to claim 1 or 2, **characterised in that** the phase transfer catalyst comprises an onium ion.

4. Binder composition for producing a wood-based material according to at least one of the preceding claims, **characterized in that** the phase transfer catalyst comprises an ammonium, phosphonium and/or sulphonium ion.

5. Binder composition for producing a wood-based material according to at least one of the preceding claims, **characterized in that** the phase transfer catalyst is triethylbenzylammonium chloride.

6. Binder composition for producing a wood-based material according to at least one of the preceding claims, **characterized in that** the phase transfer catalyst is a crown ether, in particular 12-crown-4.

7. Binder composition for producing a wood-based material according to at least one of the preceding claims, **characterised in that** the binder composition is formaldehyde-free and/or does not release formaldehyde.

8. Binder composition for producing a wood-based material according to at least one of the preceding claims, **characterized in that** the isocyanate binder is polymeric diphenylmethane diisocyanate.

9. Binder composition for producing a wood-based material according to at least one of the preceding claims, **characterized by** a proportion of the phase transfer catalyst of 0.1% to 0.5% based on the mass of the isocyanate binder.

10. Method for producing a wood-based material, in particular a board-shaped wood-based material, having the steps:
- manufacturing and/or providing a chip material,
- adding a binder composition to the chip material, the binder composition comprising an organic phase comprising at least one isocyanate binder and a second aqueous phase immiscible with the organic phase, and a phase transfer catalyst for accelerating the curing of the isocyanate binder; and
- forming the wood-based material from the glued chip material, in particular pressing it into a board-shaped wood-based material.

11. Method for producing a wood-based material according to claim 10, **characterised in that** the addition of the binder composition to the chip material is in the form of an addition of two separate components of the binder composition, one component being the organic phase comprising the isocyanate binder and the other component being the aqueous phase in which the phase transfer catalyst is dissolved.

12. Method for producing of a wood-based material according to claim 10, **characterized in that** the binder composition consisting of two components is formed only immediately before addition to the chip material by mixing the organic phase and the aqueous phase with the phase transfer catalyst into each other.

## Revendications

1. Composition de liant pour la fabrication d'un matériau en bois, en particulier d'un matériau en bois en forme de plaque, avec
- d'une phase organique présentant au moins un liant isocyanate,
- d'une phase aqueuse et
- un catalyseur de transfert de phase pour accélérer le durcissement du liant isocyanate.

2. Composition de liant pour la fabrication d'un matériau en bois selon la revendication 1, **caractérisée en ce que** la phase aqueuse n'est pas miscible avec la phase organique et est prévue comme réactif pour le durcissement du liant isocyanate.

3. Composition de liant pour la fabrication d'un matériau en bois selon la revendication 1 ou 2, **caractérisée en ce que** le catalyseur de transfert de phase comprend un ion onium.

4. Composition de liant pour la fabrication d'un matériau en bois selon au moins l'une des revendications précédentes, **caractérisée en ce que** le catalyseur de transfert de phase présente un ion ammonium, phosphonium et/ou sulfonium.

5. Composition de liant pour la fabrication d'un matériau en bois selon au moins l'une des revendications précédentes, **caractérisée en ce que** le catalyseur de transfert de phase est le chlorure de triéthylbenzylammonium.

6. Composition de liant pour la fabrication d'un matériau à base de bois selon au moins l'une des revendications précédentes, **caractérisée en ce que** le catalyseur de transfert de phase est un éther-couronne, en particulier 12-couronne-4.

7. Composition de liant pour la fabrication d'un matériau en bois selon au moins l'une des revendications précédentes, **caractérisée en ce que** la composition de liant est exempte de formaldéhyde et/ou ne libère pas de formaldéhyde.

8. Composition de liant pour la fabrication d'un matériau en bois selon au moins l'une des revendications précédentes, **caractérisée en ce que** le liant isocyanate est le diisocyanate de diphénylméthane polymère.

9. Composition de liant pour la fabrication d'un matériau en bois selon au moins l'une des revendications précédentes, **caractérisée par** une proportion du catalyseur de transfert de phase de 0,1 % à 0,5 % par rapport à la masse du liant isocyanate.

10. Procédé de fabrication d'un matériau à base de bois, en particulier d'un matériau à base de bois en forme de plaque, comprenant les étapes suivantes :
- fabrication et/ou mise à disposition d'un matériau de copeaux,
- ajouter une composition de liant au matériau de copeaux, la composition de liant comprenant une phase organique comprenant au moins un liant isocyanate et une seconde phase aqueuse non miscible avec la phase organique, et un catalyseur de transfert de phase pour accélérer le durcissement du liant isocyanate, et
- formage du matériau en bois à partir du matériau en copeaux encollé, en particulier pressage pour obtenir un matériau en bois en forme de plaque.

11. Procédé de fabrication d'un matériau en bois selon la revendication 10, **caractérisé en ce que** l'addition de la composition de liant au matériau de copeaux se fait sous la forme d'une addition de deux composants séparés de la composition de liant, l'un des composants étant la phase organique présentant le liant isocyanate et l'autre composant étant la phase aqueuse dans laquelle le catalyseur de transfert de phase est dissous.

12. Procédé de fabrication d'un matériau en bois selon la revendication 10, **caractérisé en ce que** la composition de liant constituée de deux composants n'est formée qu'immédiatement avant l'addition au matériau de copeaux, en mélangeant l'une dans l'autre la phase organique et la phase aqueuse avec le catalyseur de transfert de phase.
